# EUROPEAN PATENT APPLICATION

(11) **EP 4 818 901 A1**
(43) Date of publication of application: **07.10.2026**
(21) Application number: 25168710.9
(22) Date of filing: 04.04.2025
(51) Int. Cl.: G06F 9/50, G06F 1/20, G06F 1/324, G06F 1/3296, G06N 20/00, G06N 3/0464

(54) **INTERPRETER-DRIVEN SYSTEM-ON-CHIP CONTROLLER**

(71) Applicant: GOOGLE LLC, Mountain View CA 94043 (US)
(72) Inventor: HEIDARINEJAD, Mohsen, Mountain View, 94043 (US); MITTAL, Arpit, Mountain View, 94043 (US)
(74) Representative: Marks & Clerk GST

(57) **Abstract**

Techniques and apparatuses are described for implementing an interpreter-driven system-on-ship (SoC) controller. In example aspects, an interpreter receives a plurality of performance state propositions configured to enforce one or more performance states for one or more intellectual property (IP) agents of the SoC. At least one performance state proposition is received from an SoC controller and at least one from one or more modules. The interpreter, in some examples, selects a performance state proposition. In some examples, the interpreter generates a new performance state proposition based on the performance state propositions. The interpreter, in aspects, outputs one or more of the performance state propositions to the one or more IP agents. In this way, an SoC can dynamically manage multiple operations concerns for one or more processors, such as balancing performance and temperature concerns to realize a tailored user experience.

## Description

### BACKGROUND

Original equipment manufacturers (OEMs) of electronic devices using one or more intellectual property (IP) agents (e.g., multi-core processors) on a system-on-chip (SoC) architecture face the challenge of dynamically balancing IP agent parameters, such as performance and temperature. In order to address these concerns, a controller may be employed. The use of the controller may include several negative effects, such as improper initialization and unregulated performance level changes, which can cause significant performance degradation due to instability, inefficiency, and oscillations. For example, a mismatch in the controller's internal state with actual conditions of the SoC and/or IP agent can lead to overcorrection or underperformance during an initialization phase. Additionally, overshooting and oscillatory behavior may waste SoC energy consumption and disrupt workload execution. Simply adjusting a controller gain may not address these issues, as gain changes affect the overall responsiveness but cannot rectify initialization errors or mitigate rapid, destabilizing transitions. Furthermore, deploying adaptive and/or general dynamic architectures is expensive in a computationally resource-constrained SoC. An interpreter-driven SoC controller is needed to ensure a tailored user experience.

### SUMMARY

Techniques and apparatuses are described for implementing an interpreter-driven system-on-chip (SoC) controller. In example aspects, an interpreter receives a plurality of performance state propositions configured to enforce one or more performance states for one or more intellectual property (IP) agents of the SoC. At least one performance state proposition is received from an SoC controller, and at least one from one or more modules. The interpreter, in some examples, selects a performance state proposition. In some examples, the interpreter generates a new performance state proposition based on the performance state propositions. The interpreter, in aspects, outputs one or more of the performance state propositions to the one or more IP agents. In this way, a system-on-chip can dynamically manage multiple operations concerns for the one or more processors, such as balancing performance and temperature concerns to realize a tailored user experience.

Aspects described below include a method performed by a system-on-chip, the method including receiving, by an interpreter, a plurality of performance state propositions. The plurality of performance state propositions includes a first performance state proposition received from a controller. The plurality of performance states further includes a second performance state proposition received from one or more modules. The method further includes generating a performance state change command. The performance state change command is configured to alter a performance state of an intellectual property (IP) agent. The method further includes outputting the performance state change command to the IP agent.

Aspects described below also include a system-on-chip including one or more processors, one or more process modules, and a memory storing instructions that, when accessed by the one or more processors, cause the one or more processors to perform any one of the described methods.

Aspects described below also include a non-transitory, computer-readable medium that, when accessed by one or more processors, causes the one or more processors to perform any one of the described methods.

Aspects described below also include a computer programming product that, when accessed by one or more processors, causes the one or more processors to perform any one of the described methods.

### BRIEF DESCRIPTION OF THE DRAWINGS

Apparatuses and techniques for implementing an interpreter-driven SoC controller are described with reference to the following drawings. The same numbers are used throughout the drawings to reference like features and components:
FIG. 1 illustrates an example environment in which an interpreter-driven SoC controller can be implemented;
FIG. 2 illustrates an example implementation of a computing device that can implement aspects of an interpreter-driven SoC controller;
FIG. 3 illustrates an example implementation of an interpreter-driven SoC controller;
FIG. 4 illustrates example modules for an interpreter-driven SoC controller;
FIG. 5 illustrates an example implementation of an interpreter-driven SoC controller;
FIG. 6 illustrates an example of machine-learning (ML), as outlined in this disclosure;
FIG. 7 illustrates an example ML architecture for an interpreter-driven SoC controller;
FIG. 8 illustrates an example method for performing an interpreter-driven SoC controller; and
FIG. 9 illustrates another example method for an interpreter-driven SoC controller.

### DETAILED DESCRIPTION

An electronic device can be implemented with a system-on-chip (SoC), which can provide many features of the electronic device. An example SoC can include one or more intellectual property (IP) agents. The one or more IP agents, for example, can include a central processing unit (CPU), a graphics processing unit (GPU), a tensor processing unit (TPU), a neural processing unit (NPU), an associative processing unit (APU), a field-programmable gate array (FPGA), a visual processing unit (VPU), a digital signal processor (DSP), a memory controller, a universal serial bus (USB) controller, a peripheral component interconnect express (PCIe) controller, an Ethernet controller, an Inter-Integrated Circuit (I2C) controller, a Serial Peripheral Interface (SPI) controller, a Direct Memory Access (DMA) controller, a WiFi controller, a Bluetooth controller, a hardware security module (HSM), a random number generator (RNG), an analog-to-digital converter (ADC), a digital-to-analog converter (DAC), a sensor, an audio processor, a video processor, a cryptographic accelerator, or an image sensor interface.

Original equipment manufacturers (OEMs) of electronic devices using such SoCs, including those with multi-core processors, face the challenge of dynamically balancing IP agent parameters (performance, temperature, etc.). Consider a user of a computing device using the computing device for video calling. The user may expect a certain level of performance, but, if the computing device allocates too many resources to the computing device, an experience of the user may be negatively affected. For example, the computing device can drain a battery too quickly or produce too much heat. Consider a second use case of the computing device, where the user plays a high-performance video game. In this situation, the user requires maximum performance at the expense of other parameters (e.g., battery life), but heat concerns persist. A dynamic management including parameter prediction is needed to ensure a tailored user experience.

A controller can be used to govern a performance state of the one or more IP agents (including a plurality of performance states corresponding to a plurality of IP agents). The controller can, in some instances, provide unwanted conditions for the user experience. For example, the controller can initialize the performance state in such a way that one or more of the IP agents experience sudden changes. The sudden changes may negatively affect the user experience. For example, the controller can determine a change in a temperature for a CPU based on received conditions and/or parameters from the CPU. However, this change in temperature can be, in this example, a relatively drastic change in the performance state such that the user experiences a marked slowdown in performance. Such a marked slowdown can result in unwanted conditions, such as dropped video frames, stutter, lag, etc.

The present document details the use of an interpreter, which can enable selection between multiple performance state propositions. In the context of this document, the term performance state proposition is defined as data configured to change the performance state of an IP agent. For example, if the CPU is determined to be in a performance state such that there is too high of a heat output, the performance state proposition can include instructions to reduce a voltage of the CPU. The performance state proposition can be configured to account for and/or affect any parameter of the IP agent, examples of which shall be illustrated further on in the document.

The interpreter receives the performance state proposition from the controller. In aspects, the interpreter also receives a performance state proposition from a module (including receipt of a plurality of performance state propositions from a plurality of modules). The interpreter, in aspects, generates a performance state change command based on the received performance state propositions. In some examples, the performance state change command is one of the performance state propositions. For example, the interpreter can be configured to operate the SoC in a default safe manner, selecting the performance state proposition with the most conservative operating conditions for the one or more IP agents as the performance state change command. For example, the selection can proceed by comparing the performance state propositions with one or more threshold values, or by comparing the performance state propositions to one another.

In some examples, the performance state change command is configured to change an initialization of the controller. In some examples, the operation of the SoC by the interpreter using the performance state change command can be accomplished by the initialization of the controller. In such examples, the controller can be the agent that interacts directly with the one or more IP agents and/or the SoC. For the purposes of this disclosure, such an operation of the controller, which is predicted by receipt of the performance state change command from the interpreter, is implied directly or indirectly when reference is made to one or more IP agents and/or the SoC being influenced, controlled, or otherwise changed by the performance state change command of the interpreter.

The use of the interpreter, in aspects, allows for a nuanced performance state change for the IP agent. Multiple performance state propositions can be considered, as well as multiple operating conditions, targets, practices, etc. For example, the interpreter can operate using a target of maximum performance without risking device damage. In another example, the interpreter can operate using a target of maximum battery savings while maintaining a minimum acceptable performance. In still another example, the interpreter can operate using a target of a smooth user experience (e.g., minimized lag, no frame drops in a video, etc.).

### Operating Environment

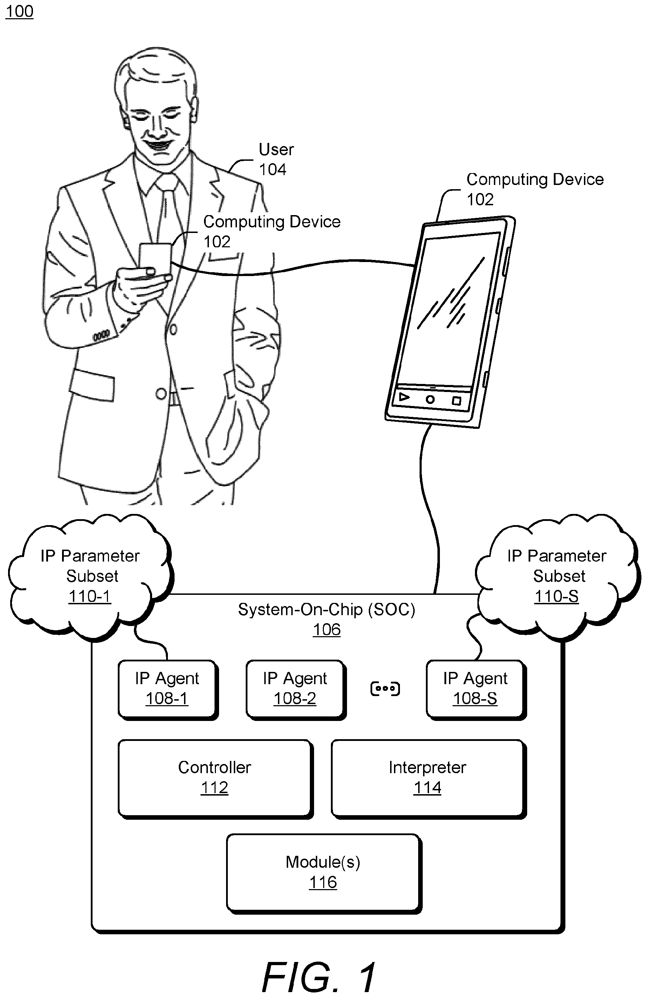

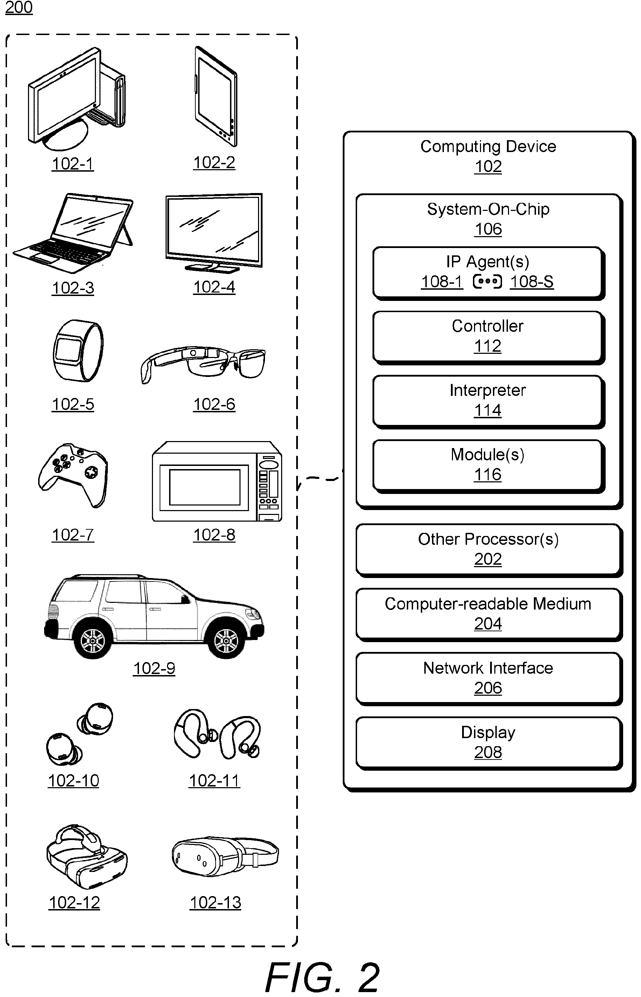

FIG. 1 illustrates an example environment 100 in which an interpreter-driven SoC controller can be implemented. In the example environment 100, a computing device 102 provides features and/or services for a user 104. Although depicted as a smartphone, the computing device 102 can include other types of devices, including those described with respect to FIG. 2. The computing device 102 includes at least one system-on-chip (SOC) 106. The system-on-chip 106 can be implemented with electronic circuitry, a microprocessor, memory, input-output (I/O) control logic, communication interfaces, firmware, and/or software useful to provide functionalities of the computing device 102.

The system-on-chip 106 includes one or more IP agents 108-1, 108-2... 108-S, where S represents a positive integer. The one or more IP agents 108 can also be referred to as intellectual-property blocks (IP blocks), intellectual-property cores, etc. The one or more IP agents 108, for example, can be one or more of a central processing unit (CPU), a graphics processing unit (GPU), a digital signal processor (DSP), a memory controller, a universal serial bus (USB) controller, a peripheral component interconnect express (PCIe) controller, an Ethernet controller, an Inter-Integrated Circuit (I2C) controller, a Serial Peripheral Interface (SPI) controller, a Direct Memory Access (DMA) controller, a WiFi controller, a Bluetooth controller, a hardware security module (HSM), a random number generator (RNG), an analog-to-digital converter (ADC), a digital-to-analog converter (DAC), a sensor, an audio processor, a video processor, a cryptographic accelerator, or an image sensor interface.

The one or more IP agents 108 have one or more IP parameter subsets 110. For example, the IP agent 108-1 has the IP parameter subset 110-1. The one or more IP parameter subsets 110 can affect a condition of the computing device 102, the SoC 106, or other related components. Examples of the one or more IP parameters 110 pertaining to an IP agent 108 of a CPU include a clock frequency, a cache size and/or configuration (e.g., L1, L2, L3), an instruction set architecture (ISA), a number of cores, a voltage, a pipeline depth, power management settings, read/write registers, control bits, or status flags. Examples of the one or more IP parameters 110 pertaining to an IP agent 108 of a GPU include a number of shader cores, a memory bandwidth, texture mapping units, a rendering pipeline configuration, clock frequencies, read/write registers, a voltage, or memory-mapped control. Examples of the one or more IP parameters 110 pertaining to an IP agent 108 of a DSP include a multiply-accumulate (MAC) unit count, a memory architecture, a clock frequency, data precision, instruction set extensions, read/write registers, or memory mapped control.

Examples of the one or more IP parameters 110 pertaining to an IP agent 108 of a memory controller include a memory type (double data rate (DDR) 4, DDR5, etc.), a memory clock frequency, timing parameters (latency, refresh rates), error correction (ECC) settings, a memory bus width, read/write registers, or control bits. Examples of the one or more IP parameters 110 pertaining to an IP agent 108 of a USB controller include a USB version (2.0, 3.0, etc.), endpoint configuration, transfer modes (bulk, interrupt, isochronous, etc.), power management settings, read/write registers, or endpoint buffers. Examples of the one or more IP parameters 110 pertaining to an IP agent 108 of a PCIe Controller include a PCIe generation (3.0, 4.0, 5.0, etc.), a lane width, root complex or endpoint configuration, DMA settings, link speeds, a configuration space, or registers.

Examples of the one or more IP parameters 110 pertaining to an IP agent 108 of an Ethernet controller include an Ethernet speed (10/100/1000 Mbps, etc.), a MAC address, flow control settings, interrupt settings, read/write registers, or packet buffers. Examples of the one or more IP parameters 110 pertaining to an IP agent 108 of an I2C controller include a clock speed, an address configuration, a master/slave mode, read/write registers, or data buffers. Examples of the one or more IP parameters 110 pertaining to an IP agent 108 of an SPI controller include a clock speed, a clock polarity and/or phase, a data frame size, a master/slave mode, read/write registers, or data buffers.

Examples of the one or more IP parameters 110 pertaining to an IP agent 108 of a DMA controller include source and destination addresses, a transfer size, a transfer mode (memory-to-memory, peripheral-to-memory, etc.), or read/write registers or transfer descriptors. Examples of the one or more IP parameters 110 pertaining to an IP agent 108 of a WiFi controller include wireless standards (802.11 a/b/g/n/ac/ax), frequency bands, security protocols, power settings, or read/write registers or firmware parameters. Examples of the one or more IP parameters 110 pertaining to an IP agent 108 of a Bluetooth controller include a Bluetooth version (4.0, 5.0, etc.), a profile support, a transmit power, connection parameters, or read/write registers or firmware parameters.

Examples of the one or more IP parameters 110 pertaining to an IP agent 108 of an HSM include cryptographic algorithm support, a key storage, secure boot settings, an access control, or read/write secure registers or cryptographic functions. Examples of the one or more IP parameters 110 pertaining to an IP agent 108 of an RNG include a random number generation algorithm, an output data rate, a statistical quality, or read output data registers or status registers. Examples of the one or more IP parameters 110 pertaining to an IP agent 108 of an ADC include a resolution, a sampling rate, an input voltage range, a channel selection, or read/write control registers or data registers.

Examples of the one or more IP parameters 110 pertaining to an IP agent 108 of a DAC include a resolution, an output voltage range, an update rate, a channel selection, or read/write control registers or data registers. Examples of the one or more IP parameters 110 pertaining to an IP agent 108 of a sensor include a measured temperature, acceleration values, lux values, a resolution, a sensitivity, or read data registers. Examples of the one or more IP parameters 110 pertaining to an IP agent 108 of an audio processor include a codec support, a sampling rate, a volume control, equalizer settings, or read/write registers or audio buffers.

Examples of the one or more IP parameters 110 pertaining to an IP agent 108 of a video processor include a codec support (H.264, H.265, etc.), a resolution, a frame rate, a color space conversion, or read/write registers or video buffers. Examples of the one or more IP parameters 110 pertaining to an IP agent 108 of a cryptographic accelerator include an algorithm support (AES, RSA, etc.), a key size, an operating mode, read/write registers, key buffers, or data buffers. Examples of the one or more IP parameters 110 pertaining to an IP agent 108 of an image sensor interface include a pixel format, a frame rate, an exposure control, a gain control, or read/write registers or image data buffers.

For example, the one or more IP agents 108 can produce heat as one of the IP parameters of the one or more IP parameter subsets 110. The heat can contribute to increasing an internal temperature of the computing device 102. Left unchecked, the accumulation of heat within the computing device 102 can result in a high temperature that can damage the system-on-chip 106, can damage other components of the computing device 102, and/or can reduce a reliability of the computing device 102. In some cases, the high temperature can cause the computing device 102 to become unsafe for the user 104 to operate.

In another example, the one or more IP agents 108 can have a performance output as one of the operation parameters of the one or more operation parameter subsets 110. In an example where the user 104 is engaging with the computing device 102 in such a way that minimal performance is required (e.g., a low power state, using the computing device 102 as a music player), if the performance output is higher than required, the user 104 may experience unwanted effects, such as a decreased battery life. In an example where the user 104 is engaging with the computing device 102 in such a way that high performance is required (e.g., active mapping, a video game), if the performance output is lower than required, the user 104 may experience unwanted conditions, such as lag, skipped frames, etc.

To avoid these situations, the system-on-chip 106 includes a controller 112 (e.g., an SoC controller, a power controller, a temperature controller). The controller 112, in aspects, controls one or more performance states pertaining to the one or more IP agents 108. For example, consider the example of the CPU as the one or more IP agents 108. The CPU can have parameters such as the voltage and the frequency. The controller 112 can, in some examples, include threshold parameters for the CPU. For example, the threshold parameters can include a maximum operating temperature, a performance minimum, etc. Suppose an application accessed by the user 104 of the computing device 102 sets the performance minimum at a relatively high point and the CPU is operating at a temperature much lower than a safe temperature threshold. The controller 112 can, in such an example, send a controller performance state change command to the CPU to increase performance.

In some examples, changes to the one or more IP agents 108 made by the controller 112 can be abrupt. For example, consider the audio processor as the one or more IP agents 108 with the corresponding IP parameter subset 110 including the volume control. In some examples, the controller 112 can include a controller parameter calling for a maximum volume to increase due to increased ambient noise. If the controller 112 increases the overall volume suddenly, this can lead to a negative user experience. In aspects, smooth operation of the controller 112 can be advantageous, such as by proper controller initialization.

In aspects, an interpreter 114 is included on the SoC 106 to ensure smooth operation of the controller 112. The interpreter 114, in some examples, can choose whether or how to employ the controller performance state change command from the controller 112. In aspects, one or more modules 116 are included on the SoC 106. The one or more modules 116 can, for example, provide one or more module performance state change commands to the interpreter 114. In some examples, the interpreter 114 can select from the controller performance state change command and the module performance state change commands to generate an interpreter performance state change command. In other examples, the interpreter 114 can generate the interpreter performance state change command based on one or more of the controller performance state change command and the one or more module performance state change commands. In some examples, the interpreter 114 can modify the controller performance state change command by comparing it to a threshold value for a rate of change for operational optimization, user experience, or any other thing pertaining to smooth operation of the computing device 102 and/or the SoC 106.

The components of the system-on-chip 106 (e.g., the one or more IP agents 108, the one or more modules 116) can alternatively be implemented within other types of integrated circuits or embedded systems, such as a microchip, an application-specific integrated circuit (ASIC), an application-specific standard product (ASSP), a digital signal processor (DSP), a programmable system-on-chip (PSoC), a system-in-package (SiP), a controller, and so forth. The computing device 102 is further described with respect to FIG. 2.

### Example Computing Device

FIG. 2 illustrates an example implementation of the computing device 102 of FIG. 1. The computing device 102 is illustrated with various non-limiting example devices, including a desktop computer 102-1, a tablet 102-2, a laptop 102-3, a television 102-4, a computing watch 102-5, computing glasses 102-6, a gaming system 102-7, a computing appliance 102-8, a vehicle 102-9, earbuds 102-10 (e.g., true-wireless earbuds, wired earbuds), hearing aids 102-11, a virtual-reality (VR) headset 102-12, and an augmented-reality (AR) headset 102-13. Other devices may also be used, including a home service device, a smart speaker, a smart thermostat, a baby monitor, a Wi-Fi^{™} router, a drone, a trackpad, a drawing pad, a netbook, an e-reader, a home automation and control system, a wall display, or another home appliance. Note that the computing device 102 can be wearable, non-wearable but mobile, or relatively immobile (e.g., desktops and appliances). The computing device 102 includes the SoC 106 of FIG. 1. The SoC 106 includes the one or more IP agents 108-1 to 108-S, the controller 112, the interpreter 114, and the one or more modules 116, as described in FIG. 1.

The computing device 102 also includes, in some examples, at least one other processor 202 and at least one computer-readable medium 204 (e.g., non-transitory computer-readable medium). The computer-readable medium 204 can include memory media and/or non-transitory storage media. An operating system (not shown) embodied as computer-readable instructions on the computer-readable medium 204 can be executed by the at least one other processor 202 and/or the one or more IP agents 108. In some examples, the controller 112, the interpreter 114, at least one of the one or more modules 116, or a combination of these reside on the computer-readable medium 204.

The computer-readable medium 204 can include one or more applications. Execution of the application(s) can, in some examples, involve operating the one or more IP agents 108. Example applications can include a messaging application, an application that plays videos, a navigation application, or a gaming application. Different applications can have different performance requirements and cause the one or more IP agents 108 (e.g., the CPU, the GPU) to operate with different workloads. For example, consider the one or more IP agents 108 being the CPU. The messaging application can require less processing power from the CPU than the gaming application. In some examples, different applications can have other usage requirements, such as a core count of the CPU, usage of the CPU and the GPU concurrently, access to the RNG, etc. In general, each application can be associated with particular performance state characteristics (e.g., relating to the one or more IP parameter subsets 110), which, in some examples, represent usage of a number of resources of the SoC 106. Consider, for example, the performance state characteristic being a heat of the CPU. This heat generation impacts an overall temperature of the computing device 102.

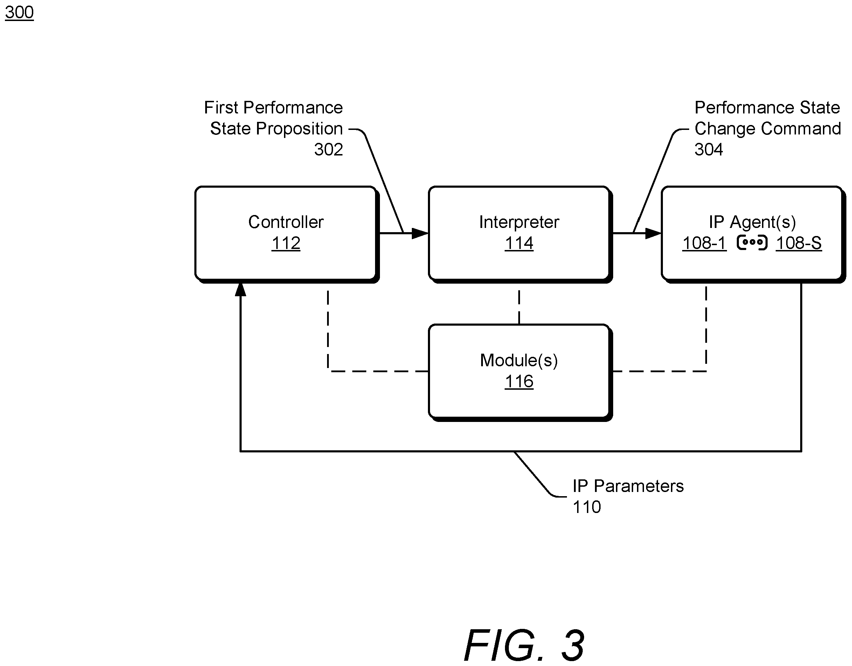

The computing device 102 can additionally include a network interface 206 for communicating data over wired, wireless, or optical networks. For example, the network interface 206 may communicate data over a local-area network (LAN), a wireless local-area network (WLAN), a personal-area network (PAN), a wide-area network (WAN), an intranet, the Internet, a peer-to-peer network, a point-to-point network, a mesh network, Bluetooth^{™}, and the like. The computing device 102 may also include a display 208. An example implementation of an interpreter-driven SoC controller with respect to the controller 112, the interpreter 114, and the one or more modules 116 is further described with respect to FIG. 3.

### Dynamic Control for a System-on-Chip

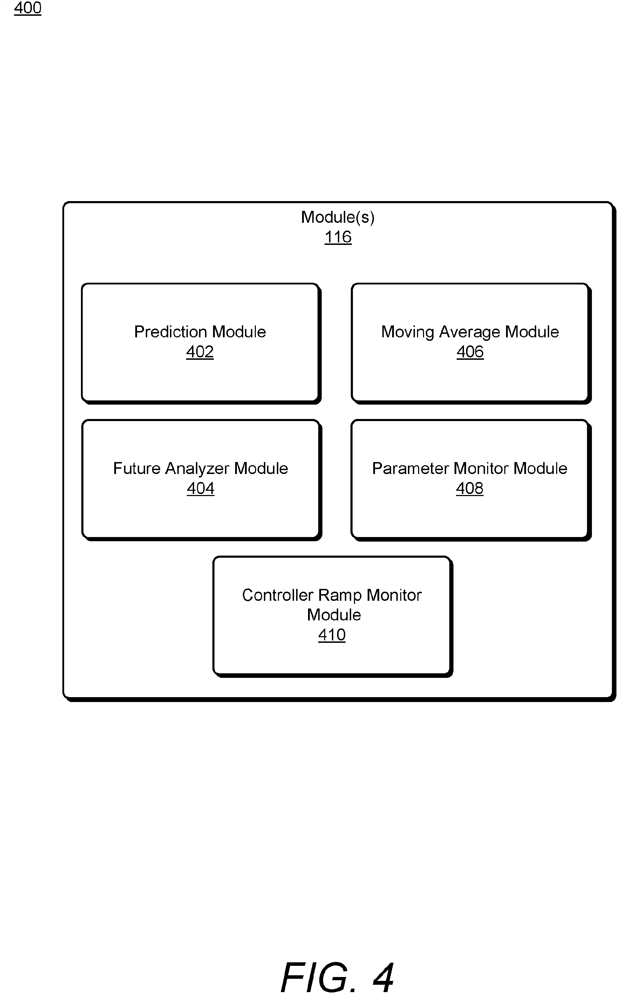

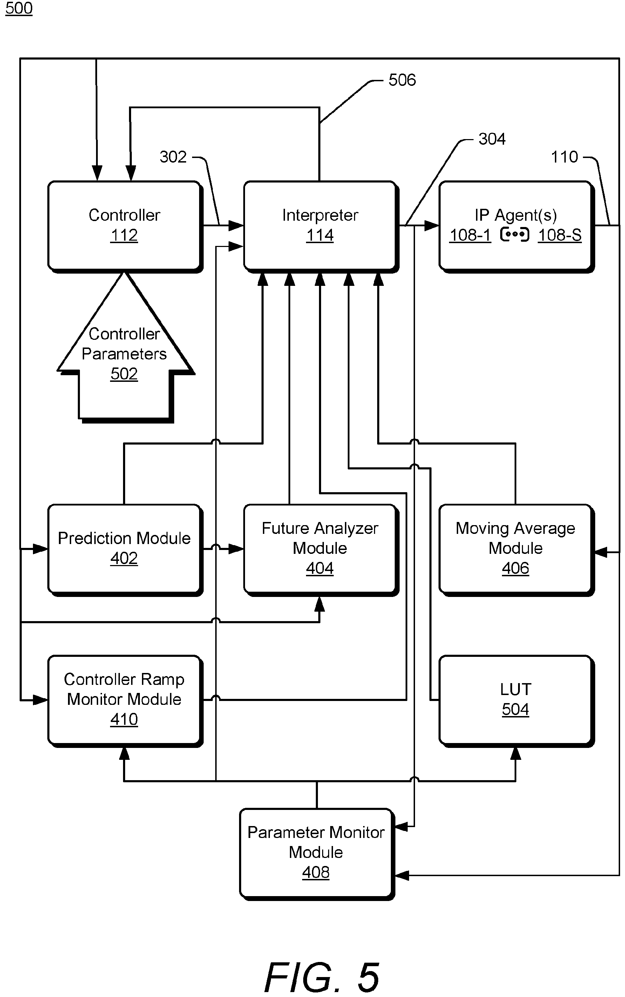

FIG. 3 illustrates an example implementation 300 of an interpreter-driven SoC controller. In summary, the controller 112 (described with respect to FIG. 1) outputs a first performance state proposition 302 to the interpreter 114. The interpreter 114 outputs a performance state change command 304 to the one or more IP agents 108. In aspects, the one or more modules 116 may also receive the one or more IP parameters 110 from the one or more IP agents 108, output one or more second performance state propositions to the interpreter 114, or both. Types of the one or more modules 116 are further described with respect to FIG. 4. Further details of interactions, which include the one or more modules 116, are described with respect to FIG. 5.

The IP parameters 110 can include, in some examples, subsets of IP parameters 110 from two or more of the one or more IP agents 108. In such examples, the first performance state proposition 302, the one or more second performance state propositions, the performance state change command 304, or any combination of these can be a plurality of first performance state propositions 302, a plurality of second performance state propositions, and/or a plurality of performance state change commands 304, respectively.

For example, one of the one or more IP agents 108 can be the CPU and another of the one or more IP agents 108 can be the video processor. In such an example, a first IP parameter of the one or more IP parameters 110 can be the frequency of the CPU and a second IP parameter of the one or more IP parameters 110 can be the frame rate of the video processor. The controller 112 can, in this example, provide the plurality of first performance state propositions 302 including a first performance state proposition 302 based on the frequency of the CPU and configured to change the frequency of the CPU and a first performance state proposition 302 based on the frame rate of the video processor and configured to change the frame rate of the video processor. The one or more modules 116 can, in this example, provide the plurality of second performance state propositions including a second performance state proposition based on the frequency of the CPU and configured to change the frequency of the CPU and a second performance state proposition based on the frame rate of the video processor and configured to change the frame rate of the video processor. The interpreter 114, in this example, can generate the plurality of performance state change commands 304 including a performance state change command 304 based on the first performance state proposition 302 and the second performance state proposition that are based on the frequency of the CPU and configured to change the frequency of the CPU. The generated plurality of performance state change commands 304 can, in this example, further include a performance state change command 304 based on the first performance state proposition 302 and the second performance state proposition that are based on the frame rate of the video processor and configured to change the frame rate of the video processor.

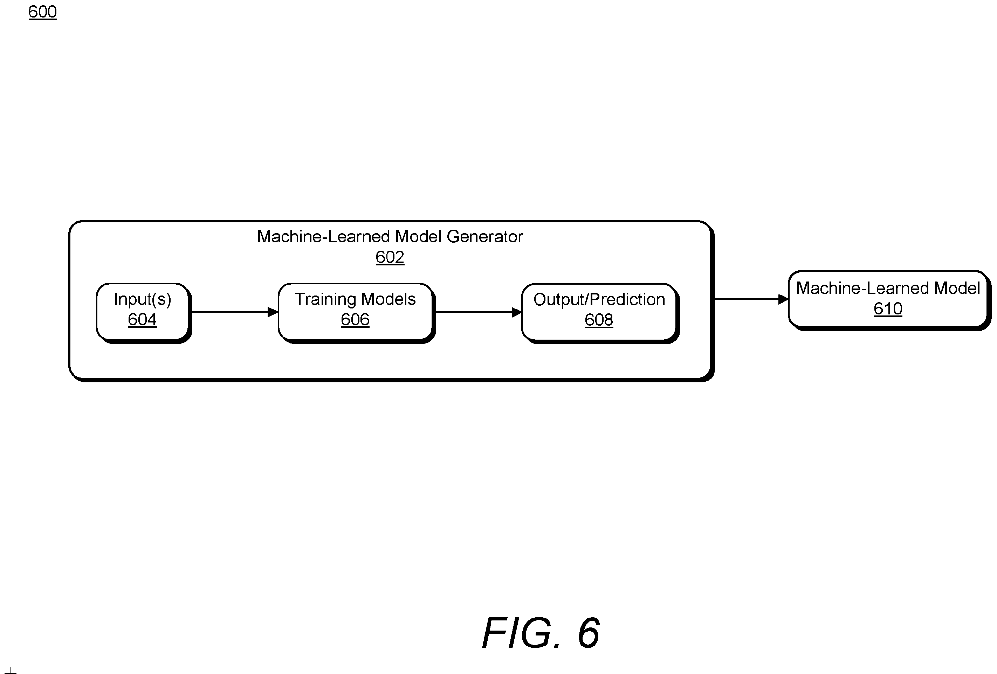

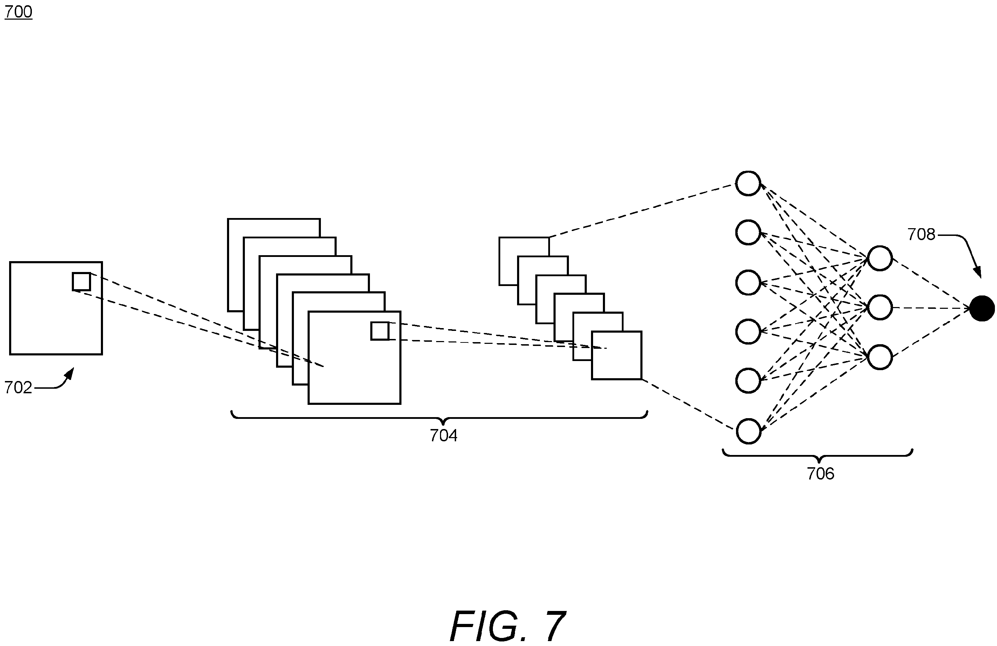

In some examples, the outputs of the controller 112, the interpreter 114, and/or the one or more modules 116 can be based on a machine-learned (ML) model. For example, the interpreter 114 can include an ML model that takes the first performance state proposition 302 and the second performance state proposition as inputs, providing the performance state change command 304 as an ML output. In some examples, other inputs can also be used by the ML model, such as the one or more IP parameters 110, one or more threshold values, one or more policies, etc. Additional aspects relating to ML are described with respect to FIGS. 6 and 7.

FIG. 4 illustrates example modules 116 for an interpreter-driven SoC controller. A prediction module 402 can, in aspects, predict a future evolution of the one or more IP agents 108 of FIG. 1, the one or more IP parameters 110 of FIG. 1, or another aspect of the SoC 106 of FIG. 1. For example, the one or more IP agents 108 can be the GPU and the one or more IP parameters 110 can be a heat or temperature of the GPU. The prediction module 402 can, in this example, take as inputs the heat, the clock frequency, etc. and output a prediction of a future temperature of the GPU. In some examples, the prediction, the inputs, both, and/or portions of both are in a time-series format. In some examples, the prediction is an output of a prediction ML model. In some examples, the prediction module 402 generates, based on the prediction or as the prediction, a prediction performance state proposition. The prediction can be, in some examples, a prediction of a ramp rate for the future evolution of the one or more IP agents 108, the one or more IP parameters 110, or the other aspect of the SoC 106. In some examples, the ramp rate is based on one or more future execution times of the controller 112.

A future analyzer module 404, in aspects, receives the one or more IP parameters 110, the prediction from the prediction module 402, or both. The future analyzer module 404, in aspects, generates a future performance state proposition and outputs the future performance state proposition to the interpreter 114. In some examples, the future performance state proposition is based on the prediction. In some examples, the future performance state proposition is based on an output from a future ML model. In some examples, the future performance state proposition can be based on an initial engagement time of the controller 112.

In some examples, the future analyzer module 404 can base the future performance state proposition on a comparison between the one or more IP parameters 110 and the prediction from the prediction module 402. For example, the one or more IP parameters 110 can be a current performance state and the prediction from the prediction module 402 can be a predicted performance state. The future analyzer module 404 can, in such examples, compare the current performance state with the predicted performance state, optionally including comparing one or either to one or more threshold values, and, based on the comparison, generate the future performance state proposition.

A moving average module 406, in aspects, provides a moving average performance state proposition to the interpreter 114. In some examples, engagement of the controller 112 includes a mapping of the controller 112 to an initial performance state configured to be enforced on the one or more IP agents 108 and/or the SoC. In such examples, a change between the initial performance state and the performance state change command 304 of FIG. 3 can be enough to negatively affect a user experience (dropped frame rate, lag, jitter, etc.). The moving average performance state proposition can be, in some examples, configured to average, blend, or otherwise combine the initial performance state and the performance state change command 304 in such a way as to minimize negative effects from the difference between the initial performance state and the performance state change command 304. In some examples, the interpreter 114 can receive the moving average performance state proposition and the performance state change command can be further based on the moving average performance state proposition.

A parameter monitor module 408, in aspects, provides a monitor performance state proposition to the interpreter 114. The monitor performance state proposition, in some examples, can be configured to enforce ramp-up and ramp-down limits to other performance state propositions. For example, the interpreter 114 can receive the future performance state proposition indicating that the CPU should operate at a reduced frequency. The parameter monitor module 408, in this example, can receive the one or more IP parameters 110 and determine a ramp-down rate for the CPU (e.g., to avoid lag, to ensure proper application performance, etc.), and the monitor performance state proposition can be based on the ramp-down rate. The interpreter 114 can base the performance state change command 304 on, for example, both the future performance state proposition and the monitor performance state proposition based on the ramp-down rate. In some examples, the one or more IP parameters 110 include the current performance state.

In some examples, the parameter monitor module 408 can perform a filtering of the one or more IP parameters 110, such as a low-pass filtering. The filtering can, for example, be used to generate a filtered IP parameter set. The monitor performance state proposition, in some examples, can be based on the filtered IP parameter set, such as by generating a low threshold, a high threshold, a ramp rate, etc. In some examples, the one or more modules 116 include a controller ramp monitor module 410. The controller ramp monitor module 410 can, for example, receive the monitor performance state proposition and/or the one or more IP parameters 110 and generate, based on the monitor performance state proposition and/or the one or more IP parameters 110, a controller ramp performance state proposition for output to the interpreter 114. In some examples, the controller ramp monitor module 410 can generate the ramp rate based on the monitor performance state proposition and/or the one or more IP parameters 110. In such examples, the controller ramp performance state proposition is based on the generated ramp rate.

FIG. 5 illustrates an example implementation 500 of an interpreter-driven SoC controller. In aspects, the interpreter 114 of FIG. 1 receives the first performance state proposition 302 of FIG. 3 from the controller 112 of FIG. 1 and one or more module performance state propositions from the one or more modules 116 of FIG. 1. Based on the first performance state proposition 302 and/or the one or more module performance state propositions, the interpreter 114 provides the performance state change command 304 of FIG. 3 to the one or more IP agents 108 of FIG. 1.

In aspects, the one or more IP agents 108 output the one or more IP parameters 110 of FIG. 1 to one or more of the controller 112, the prediction module 402 of FIG. 4, the future analyzer module 404 of FIG. 4, the moving average module 406 of FIG. 4, the parameter monitor module 408 of FIG. 4, and the controller ramp monitor module 410 of FIG. 4. In some examples, any one or more of the prediction module 402, the future analyzer module 404, the moving average module 406, the parameter monitor module 408, the controller ramp monitor module 410, and a lookup table (LUT) 504 can output a module performance state proposition to the interpreter 114. The interpreter 114, in aspects, generates the performance state change command 304. In some examples, the performance state change command 304 can be a selection of one of the first performance state proposition 302 or the one or more module performance state propositions. In some examples, the selection is based on a minimum or a combination of the first performance state proposition 302 or the one or more module performance state propositions (e.g., a comparison, a weighted sum, etc.).

In some examples, the controller 112 receives or includes one or more controller parameters 502. The one or more controller parameters 502 can, in some examples, include one or more targets, mappings, cadences, etc. for the one or more IP agent parameters 110. In some examples, the one or more controller parameters 502 can be configured to provide an initial or default performance state or an initial or default controller condition. The one or more controller parameters 502, in some examples, are based on the one or more IP parameters 110. In some examples, the one or more controller parameters 502 are not based on the one or more IP parameters 110.

In some examples, the controller 112 can encounter a condition where the controller 112 is set to an inactive state. In such examples, it can be possible for a current performance state to default to a maximum value. This can lead to an unwanted condition, such as a significant temperature overshoot if a workload starts to run while demanding operation at a maximum performance state. In another example of running period workloads (having duty cycles), the controller 112 can become inactive and reactivate in a short time period. A repeated on/off behavior of the controller 112 in a short period of time can, for example, lead to an oscillatory performance state, which can negatively affect the user experience and/or lead to more severe mitigation schemes with significant performance implications. To avoid the oscillatory performance state, in some examples, the parameter monitor module 408 can output a ramp rate and/or the monitor performance state proposition to the LUT 504. One or more values from the LUT 504 (including those informed by or otherwise based on the ramp rate and/or the monitor performance state proposition) can, in some examples, be output to the interpreter 114 in order to ramp the performance state up in a slow fashion, enforce a maximum performance state, or otherwise enforce a performance state threshold (e.g., when the controller 112 is in an inactive state).

In some examples, the interpreter 114 provides a feedback 506 to the controller 112. For example, the controller 112 can have initial or default performance state settings. The feedback 506 can be different initial or default performance states, for example based on the one or more module performance state propositions and/or the one or more IP parameters 110. In some examples, the feedback 506 can be based on a history of an operation of the SoC 106.

The various pathways of FIG. 5 show the possible logical connections between the controller 112, the interpreter 114, the one or more modules 116, the IP agents 108, and the LUT 504. For example, the prediction module 402 can output to both the future analyzer module 404 and the interpreter 114 (e.g., the prediction performance state proposition and/or the prediction referenced in the discussion on FIG. 4). The parameter monitor module 408, for example, can output to the controller ramp monitor module 410, the LUT 504, and the interpreter 114. Multiple output possibilities indicated in FIG. 5 from a single module of the one or more modules 116 (e.g., the parameter monitor module 408) can be, in some examples, output along any one or more of the possible output paths. In some examples, fewer than all of the one or more modules 116 provide an output to the interpreter 114. In some examples, at least one of the one or more modules 116 provides multiple outputs to the interpreter 114. Various alternate and/or combination pathways not pictured for clarity can, in some examples, be equally employed.

In some examples, the interpreter 114 can be more than one interpreter. For example, the interpreter 114 can be a first interpreter and a second interpreter. The first interpreter, for example, can receive an output from the future analyzer module 404 and/or the moving average module 406. In such an example, the first interpreter can provide a controller initialization output to the controller 112. The controller initialization output can be, for example, based on one or more of the output from the future analyzer module 404 and the output from the moving average module 406 (e.g., by taking a minimum of the output from the future analyzer module 404 and the output from the moving average module 406). In such an example, the second interpreter can receive the first performance state proposition 302 and the one or more module performance state propositions and generate, based on one or both of the first performance state proposition 302 and the one or more module performance state propositions, the performance state change command 304.

### Machine Learning

An ML model, as discussed in this disclosure, refers to a computer model that has been trained using one or more machine-learning techniques. In general, this training may be done by providing training inputs to one or more training models, which in turn may provide an output. The output may be in the form of a prediction, a confidence score, or another probability-based output.

FIG. 6 illustrates an example of machine-learning 600, as outlined in this disclosure. An ML model generator 602 may include training elements in the form of inputs 604, training models 606, and outputs 608 and may be used to generate an ML model 610 (e.g., the prediction module 402 of FIG. 4, the future analyzer module 404 of FIG. 4). The inputs 604 may be training data. The training data 604 may be processed by the training models 606. Examples of the training models 606 include multi-layer perceptron (MLP) models, convolutional neural networks (CNN), long short-term memory (LSTM) algorithms, generative adversarial networks (GAN), K means clustering, Gaussian mixture models (GMM), or any other of a number of machine learning training techniques known to a person of ordinary skill in the art. The training models 606 may include a single type of model or multiple types, as well as various combinations of types including combinations of single types and of multiple types.

The training models 606 may use supervised learning methods, where the training data 604 may be labeled and the outputs 608 may be graded based on their fidelity to a "truth" output. The training models 606 may use an unsupervised learning method, where there may not be labels on the training data 604 and the training models 606 may classify correlations without reference to a "truth" value. The training models 606 may combine supervised and unsupervised techniques.

The input 604 may be related to IP agent outputs (e.g., the one or more IP parameters 110 of FIG. 1). For example, the input 604 may be temperature measurements for one or more processors or one or more processor cores (e.g., the one or more processors of the one or more IP agents 108 of FIG. 1), processor or core workload, performance characteristics, idle times, scheduling, or other or a combination of these input types. The input 604 may also be from training data used to generate the ML model 610. The training data may comprise data of any of the input types described above, created for the purpose of training the ML model 610. The ML model 610 may be generated once the training of the ML model generator 602 is complete. The ML model 610 may be trained on a same device on which the ML model 610 is stored (e.g., the computing device 102 of FIG. 1) or at least one other device.

The ML model 610 may be updated with additional training after it has been initially trained. In aspects, the ML model 610 may have the same structure before and after training but may have one or more different values, such as starting vs. final values for weights and biases. In some examples, the ML model 610 may start with a different architecture prior to training, and in this way the generated ML model 610 may have architecture that is a product of the training done in the ML model generator 602.

FIG. 7 illustrates an example machine-learned architecture 700 for an interpreter-driven SoC controller. FIG. 7 is not meant to be limiting but to show one possible example out of many, which a person skilled in the art may be able to employ. The ML architecture 700 may have inputs 702. The inputs 702 may be related to IP agent outputs (e.g., the one or more IP parameters 110 of FIG. 1), module outputs (e.g., the one or more second performance state propositions of the one or more modules 116 of FIG. 1), LUT outputs (e.g., the one or more values from the LUT 504 of FIG. 5), etc. For example, the inputs 702 may be temperature measurements for one or more processors or one or more processor cores, processor or core workload, performance characteristics, idle times, scheduling, or other or a combination of these input types. In this example, the inputs 702 are first processed by a CNN 704. The CNN 704 may extract features from the inputs 702. For example, extracted features may contain elements such as motion detection, object recognition, person recognition, other elements and features common to video and image processing and identification, processor parameter-related correlations, IP parameter-related correlations, performance state-related correlations, or other correlations.

The CNN 704 may be a disconnected neural network, meaning all members of the neural network, such as perceptrons, may not be in a causal relationship with one another. It should be mentioned that other feature extraction techniques besides CNNs may be equally employed in lieu of the CNN 704. An MLP 706 neural network may receive the extracted feature outputs from the CNN 704 as inputs. The MLP 706 may be a fully connected network, which may comprise all perceptrons in a causal relationship with one another. The MLP 706 may have as an output a detection probability in the form of a prediction 708. The prediction 708 may be, for example, the prediction from the prediction module 402 as discussed in relation to FIG. 4.

An ML model trained by a trainer such as the ML architecture 700 may exhibit similar architecture. For example, suppose the ML architecture 700 uses a matrix containing the one or more IP parameters 110, the first performance state proposition 302 of FIG. 3, and the one or more module performance state propositions as the inputs 702 and provides a prediction of future processor parameters (e.g., the prediction from the prediction module 402) represented as numbers between 0 and 1 as the prediction 708. The ML model trained by the ML architecture 700 may take a matrix of input data as described in the example above as its input and output a probability vector with elements between 0 and 1 indicating the probability of the future processor parameters. The ML model may have one or more feature extraction layers, such as the CNN 704, and one or more fully connected layers, such as the MLP 706.

In aspects, feature extraction, such as that done by the feature extraction layers of the CNN 704, may be accomplished by correlating areas of the inputs 702. Such correlations may, for example, be established using a disconnected network, the disconnected network not having all neurons causally connected by necessity. The feature extraction layers may, in aspects, utilize windows of analysis within the inputs 702, the windows of analysis in some examples overlapping one another. The feature extraction layers may, in aspects, be a product of unsupervised learning. In some examples, the feature extraction is an intermediate ML output.

Though FIG. 7 depicts the ML architecture 700 as incorporating both feature extraction, such as from the CNN 704 portion, and selection and/or interpolation, such as from the MLP 706 portion, these ML models may be distinct. For example, there may be a trained generation model corresponding to the CNN 704, a trained selection model corresponding to at least a portion of the MLP 706, and a trained interpolation model corresponding to at least a portion of the MLP 706. Some or all of these ML models may be combined, or other ML models, including types not shown in FIG. 7.

It will be understood by a person of ordinary skill in the art that the aforementioned are merely examples of the types of machine-learning training that may be used to produce an ML model for any aspect of an interpreter-driven SoC controller. Other combinations and techniques may be employed, which do not alter the scope of the inventive concept of an ML-based prediction and dynamic core allocation architecture. Examples such as employing a CNN, use of the one or more IP parameters 110 as inputs, including a fully connected portion of the machine learning training, etc. are not meant to be limiting but to serve as examples of how an ML model for generating predictions of future IP parameters may be accomplished.

### Example Methods

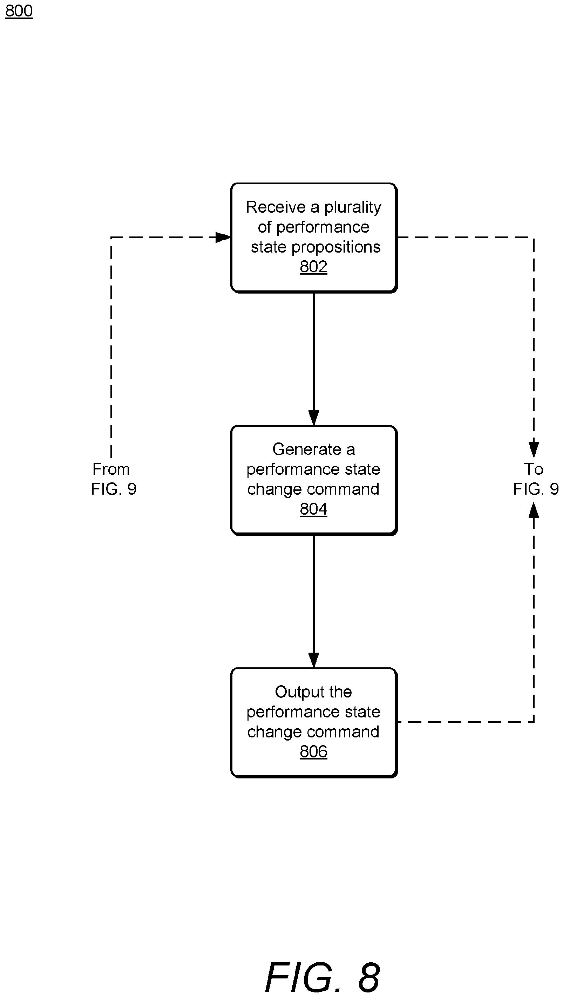

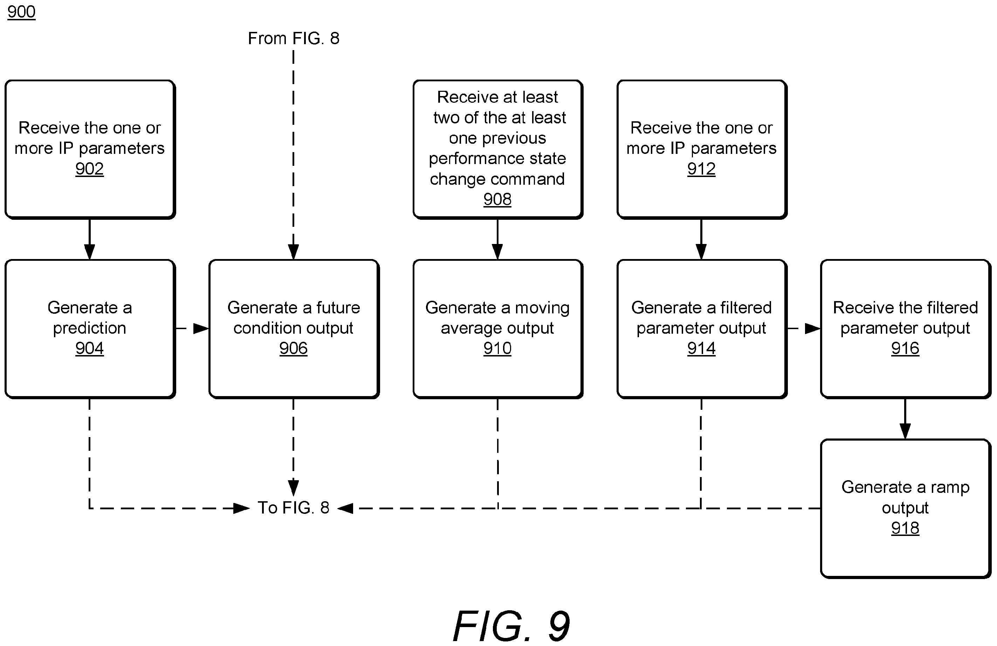

FIGS. 8 and 9 depict example methods 800 and 900 for implementing aspects of an interpreter-driven SoC controller. The methods 800 and 900 are shown as a set of operations (or acts) performed but not necessarily limited to the order or combinations in which the operations are shown herein. Further, any of one or more of the operations may be repeated, combined, reorganized, or linked to provide a wide array of additional and/or alternate methods. In portions of the following discussion, reference may be made to the environment 100 of FIG. 1 and entities detailed in FIGS. 1-7, reference to which is made for example only. The techniques are not limited to performance by one entity or multiple entities operating on one device.

FIG. 8 illustrates the example method 800 for performing an interpreter-driven SoC controller. At 802, a plurality of performance state propositions are received by an interpreter (e.g., the interpreter 114 of FIG. 1). The plurality of performance state propositions include a first performance state proposition (e.g., the first performance state proposition 302 of FIG. 3) received from a controller (e.g., the controller 112 of FIG. 1). The plurality of performance state propositions further include a second performance state proposition received from one or more modules (e.g., the one or more modules 116 of FIG. 1). In aspects, each of the plurality of performance state propositions is configured to change a performance state of one or more IP agents (e.g., the one or more IP agents 108 of FIG. 1).

In some examples, the first performance state proposition is based on at least one of one or more IP parameters (e.g., the one or more IP parameters 110) of the one or more IP agents. In some examples, the first performance state proposition is based on one or more controller parameters (e.g., the one or more controller parameters 502 of FIG. 5). In some examples, the first performance state proposition is based on at least one previous performance state change command (e.g., the performance state change command 304 of FIG. 3). In some examples, the first performance state proposition is based on a combination of the at least one of one or more IP parameters, the one or more controller parameters, and/or the at least one previous performance state change command. In some examples, the second performance state proposition is based on the one or more IP parameters.

At 804, a performance state change command (e.g., the performance state change command 304 of FIG. 3) is generated. The performance state change command is configured to change or alter the performance state of the one or more IP agents. At 806, the performance state change command is output to the one or more IP agents.

In some examples, the one or more IP agents includes a plurality of IP agents and the first performance state includes a plurality of first performance states. Each of the plurality of first performance states, in some examples, can correspond to a different one of the plurality of IP agents. The second performance state, in some examples, includes a plurality of second performance states. According to some examples, each of the plurality of second performance states corresponds to a different one of the plurality of IP agents. The performance state change command, in some examples, includes a plurality of performance state change commands. According to some examples, each of the plurality of performance state change commands corresponds to a different one of the plurality of IP agents. The outputting of the performance state change command, in some examples, includes outputting each of the plurality of performance state change commands to the respective one of the plurality of IP agents.

FIG. 9 illustrates the example method 900 for performing an interpreter-driven SoC controller. The method 900 includes the method 800. At 902, the one or more IP parameters are received by a prediction module (e.g., the prediction module 402 of FIG. 4). In some examples, the receiving of the one or more IP parameters includes receiving at least one previous performance state change command (e.g., the performance state change command 304 of FIG. 3).

At 904, a prediction is generated by the prediction module, the prediction based on the received one or more IP parameters. In some examples, the prediction is generated by an ML model (e.g., the ML model 610 of FIG. 6). In some examples, the prediction can be in a time-series format. The prediction, in some examples, is configured to alter a current performance state of the one or more IP agents. In some examples, the second performance state proposition is based on the prediction.

At 906, a future condition output is generated by a future analyzer module (e.g., the future analyzer module 404 of FIG. 4). In aspects, the future condition output is based on the prediction and/or the one or more IP parameters. In some examples, the second performance state proposition is based on the future condition output. In some examples, the future condition output is further based on an engagement time of the controller. In some examples, the future condition output is generated by the ML model. As an example, the future condition output can be a predicted future state of the one or more IP parameters based on the prediction. For example, the one or more IP parameters can be a CPU heat output and a CPU performance, and the prediction can be a predicted future heat output. The future analyzer module can, in this example, predict that the CPU performance will drop based on the predicted heat increase.

At 908, at least two previous performance state change commands are received by a moving average module (e.g., the moving average module 406 of FIG. 4). At 910, a moving average output is generated by the moving average module. In aspects, the moving average output is based on the two or more previous performance state change commands. In some examples, the second performance state proposition is based on the moving average output. As an example, the moving average output can be an averaging of the received at least two performance state change commands. For example, the averaging can be a simple averaging, a weighted averaging, a normalization, or another form of averaging.

At 912, the one or more IP parameters are received by a parameter monitor module (e.g., the parameter monitor module 408 of FIG. 4). At 912, a filtered parameter output is generated by the parameter monitor module. In aspects, the filtered parameter output is based on the one or more IP parameters. In some examples, the second performance state proposition is based on the filtered parameter output. The filtered parameter output, in some examples, is generated by filtering the one or more IP parameters (low-pass filtration, high-pass filtration, fast-Fourier transform (FFT), weighted sum, etc.).

In some examples, the filtered parameter output is based on one or more values from an LUT (e.g., the LUT 504 of FIG. 5). In some examples, the one or more values from the LUT are based on the filtered parameter output. In some examples, the basing of the filtered parameter output on the one or more values of the LUT and the basing of the one or more values of the LUT on the filtered parameter output represent a feedback loop. In some examples, the one or more values of the LUT are further based on a maximum value for the second performance state proposition and/or a minimum value for the second performance state proposition.

At 916, the filtered parameter output is received by a controller ramp monitor module (e.g., the controller ramp monitor module 410 of FIG. 4). At 918, a ramp output is generated by the controller ramp monitor module. In aspects, the ramp output is based on the filtered parameter output. In some examples, the second performance state proposition is based on the ramp output. In some examples, the ramp output is configured to control a ramp-up and ramp-down rate at which the controller and/or interpreter changes the current performance state for one or more of the one or more IP agents.

### Conclusion

Although techniques using, and apparatuses including, an interpreter-driven SoC controller have been described in language specific to features and/or methods, it is to be understood that the subject of the appended claims is not necessarily limited to the specific features or methods described. Rather, the specific features and methods are disclosed as example implementations of an interpreter-driven SoC controller.

### Additional Examples

Some additional Examples are described below.

Example 1: A method performed by a system-on-chip, the method including receiving, by an interpreter, a plurality of performance state propositions. The plurality of performance state propositions include a first performance state proposition received from a controller. The plurality of performance states further include a second performance state proposition received from one or more modules. The method further includes generating a performance state change command. The performance state change command is configured to alter a performance state of an intellectual property (IP) agent. The method further includes outputting the performance state change command to the IP agent. The performance state change command may be generated by the interpreter. The performance state change command may be generated based on the plurality of performance state propositions.

Example 2: The method of example 1, where the IP agent includes a plurality of IP agents and the first performance state proposition includes a plurality of first performance states. Each of the plurality of first performance states corresponds to a different one of the plurality of IP agents. The second performance state proposition includes a plurality of second performance states. Each of the plurality of second performance states corresponds to a different one of the plurality of IP agents. The performance state change command includes a plurality of performance state change commands. Each of the plurality of performance state change commands corresponds to a different one of the plurality of IP agents. The outputting of the performance state change command includes outputting each of the plurality of performance state change commands to the respective one of the plurality of IP agents.

Example 3: The method of any one of examples 1 or 2, where the first performance state proposition is based on at least one of one or more IP parameters from the IP agent, one or more controller parameters, and at least one previous performance state change command. The second performance state is based on the one or more IP parameters from the IP agent.

Example 4: The method of any one of the previous examples, where the IP agent is one or more of a central processing unit (CPU), a graphics processing unit (GPU), a digital signal processor (DSP), a memory controller, a universal serial bus (USB) controller, a peripheral component interconnect express (PCIe) controller, an Ethernet controller, an Inter-Integrated Circuit (I2C) controller, a Serial Peripheral Interface (SPI) controller, a Direct Memory Access (DMA) controller, a WiFi controller, a Bluetooth controller, a hardware security module (HSM), a random number generator (RNG), an analog-to-digital converter (ADC), a digital-to-analog converter (DAC), a sensor, an audio processor, a video processor, a cryptographic accelerator, or an image sensor interface.

Example 5: The method of any one of examples 3 or 4, where the one or more modules include at least one of a prediction module, a future analyzer module, a moving average module, a parameter monitor module, and a controller ramp monitor module. The prediction module may be configured to generate a prediction. The prediction may predict a future evolution of the IP agent, or one or more IP parameters of the IP agent. The future analyzer module may be configured to generate a future condition output. The moving average module may be configured to generate a moving average output. The parameter monitor module may be configured to generate a filtered parameter output. The filtered parameter output may be a filtered version of the IP parameters. The controller ramp monitor module may be configured to generate a ramp output. The ramp output may be configured to control a ramp-up and ramp-down rate at which the controller and/or interpreter changes the current performance state for one or more of the one or more IP agents.

Example 6: The method of example 5, where the one or more modules include the prediction module. The method further includes receiving, by the prediction module, the one or more IP parameters from the IP agent and the at least one previous performance state change command. The method further includes generating, by the prediction module, a prediction based on the one or more IP parameters from the IP agent and the at least one previous performance state change command. The second performance state proposition is based on the prediction.

Example 7: The method of example 5 or 6, where the prediction module includes a machine-learned (ML) model.

Example 8: The method of example 5, 6, or 7 where the prediction is in a time-series format.

Example 9: The method of example 6, 7 or 8 where the one or more modules further include the future analyzer module. The method further includes generating, by the future analyzer module and based on the prediction from the prediction module and the one or more IP parameters, a future condition output. The second performance state proposition is further based on the future condition output.

Example 10: The method of example 9, where the future condition output is further based on an engagement time of the controller.

Example 11: The method of any of examples 5 to 10, where the one or more modules include the moving average module. The method further includes receiving, by the moving average module, at least two of the at least one previous performance state change command. The method further includes generating, by the moving average module, a moving average output based on the at least two of the at least one previous performance state change command. The second performance state proposition is based on the moving average output.

Example 12: The method of any of examples 5 to 11, where the one or more modules include the parameter monitor module. The method further includes receiving, by the parameter monitor module, the one or more IP parameters from the IP agent. The method further includes generating, by the parameter monitor module, a filtered parameter output based on the one or more IP parameters from the IP agent. The second performance state proposition is based on the filtered parameter output.

Example 13: The method of example 12, where the generation of the filtered parameter output includes a low-pass filtration of the one or more IP parameters from the IP agent.

Example 14: The method of example 12 or 13, where the one or more modules further include the controller ramp monitor module. The method further includes receiving, by the controller ramp monitor module, the filtered parameter output. The method further includes generating, by the controller ramp monitor module, a ramp output based on the filtered parameter output. The second performance state proposition is based on the ramp output.

Example 15: The method of example 12, 13 or 14, where the second performance state proposition is further based on a lookup value from a lookup table. The lookup value is based on the filtered parameter output.

Example 16: The method of example 15, where the lookup value is based on a maximum value for the second performance state proposition and a minimum value for the second performance state proposition.

Example 17: A system-on-chip including one or more processors, one or more process modules, and a memory storing instructions that, when accessed by the one or more processors, cause the one or more processors to perform the method of any one of examples 1-16.

Example 18: A non-transitory, computer-readable medium that, when accessed by one or more processors, causes the one or more processors to perform the method of any one of examples 1-16.

Example 19: A computer programming product that, when accessed by one or more processors, causes the one or more processors to perform the method of any one of examples 1-16.

## Claims

1. A method performed by a system-on-chip, the method comprising:
receiving, by an interpreter, a plurality of performance state propositions, the plurality of performance state propositions:
comprising a first performance state proposition received from a controller; and
further comprising a second performance state proposition received from one or more modules;
generating a performance state change command, the performance state change command configured to alter a performance state of an intellectual property (IP) agent; and
outputting the performance state change command to the IP agent.

2. The method of claim 1, wherein:
the IP agent comprises a plurality of IP agents;
the first performance state proposition comprises a plurality of first performance states, each of the plurality of first performance states corresponding to a different one of the plurality of IP agents;
the second performance state proposition comprises a plurality of second performance states, each of the plurality of second performance states corresponding to a different one of the plurality of IP agents;
the performance state change command comprises a plurality of performance state change commands, each of the plurality of performance state change commands corresponding to a different one of the plurality of IP agents; and
the outputting of the performance state change command comprises outputting each of the plurality of performance state change commands to the respective one of the plurality of IP agents.

3. The method of any one of claims 1 or 2, wherein:
the first performance state proposition is based on at least one of:
one or more IP parameters from the IP agent;
one or more controller parameters; and
at least one previous performance state change command; and
the second performance state is based on the one or more IP parameters from the IP agent.

4. The method of any one of the previous claims, wherein the one or more modules comprise at least one of:
a prediction module;
a future analyzer module;
a moving average module;
a parameter monitor module; and
a controller ramp monitor module.

5. The method of claim 4, wherein the one or more modules comprise the prediction module, the method further comprising:
receiving, by the prediction module:
the one or more IP parameters from the IP agent; and
the at least one previous performance state change command; and
generating, by the prediction module, a prediction based on the one or more IP parameters from the IP agent and the at least one previous performance state change command, wherein the second performance state proposition is based on the prediction.

6. The method of claim 4 or 5, wherein the prediction module comprises a machine-learned (ML) model.

7. The method of claim 4, 5, or 6 wherein the prediction is in a time-series format.

8. The method of claim 5, 6 or 7 wherein:
the one or more modules further comprise the future analyzer module, the method further comprising generating, by the future analyzer module and based on the prediction from the prediction module and the one or more IP parameters, a future condition output; and
the second performance state proposition is further based on the future condition output.

9. The method of claim 8, wherein the future condition output is further based on an engagement time of the controller.

10. The method of any of claims 4 to 9, wherein the one or more modules comprise the moving average module, the method further comprising:
receiving, by the moving average module, at least two of the at least one previous performance state change command; and
generating, by the moving average module, a moving average output based on the at least two of the at least one previous performance state change command, wherein the second performance state proposition is based on the moving average output.

11. The method of any of claims 4 to 10, wherein the one or more modules comprise the parameter monitor module, the method further comprising:
receiving, by the parameter monitor module, the one or more IP parameters from the IP agent; and
generating, by the parameter monitor module, a filtered parameter output based on the one or more IP parameters from the IP agent, wherein the second performance state proposition is based on the filtered parameter output.

12. The method of claim 11, wherein the one or more modules further comprise the controller ramp monitor module, the method further comprising:
receiving, by the controller ramp monitor module, the filtered parameter output; and
generating, by the controller ramp monitor module, a ramp output based on the filtered parameter output, wherein the second performance state proposition is based on the ramp output.

13. The method of claim 11 or 12, wherein the second performance state proposition is further based on a lookup value from a lookup table, the lookup value based on the filtered parameter output.

14. A system-on-chip comprising:
one or more processors;
one or more process modules; and
a memory storing instructions that, when accessed by the one or more processors, cause the one or more processors to perform the method of any one of claims 1-13.

15. A non-transitory, computer-readable medium that, when accessed by one or more processors, causes the one or more processors to perform the method of any one of claims 1-13.
